# EUROPEAN PATENT APPLICATION

(11) **EP 2 837 789 A1**
(43) Date of publication of application: **18.02.2015**
(21) Application number: 13776190.4
(22) Date of filing: 07.02.2013
(51) Int. Cl.: F02B 19/12, F02B 43/04, F02D 19/02, F02D 19/06, F02D 41/02, F02M 21/02

(54) **2-CYCLE GAS ENGINE**

(30) Priority: 11.04.2012 JP 2012090232
(71) Applicant: Mitsubishi Heavy Industries, Ltd., Tokyo 108-8215 (JP)
(72) Inventor: ISHIDA, Hiroyuki, Tokyo 108-8215 (JP); YUUKI, Akihiro, Tokyo 108-8215 (JP); MIYANAGI, Akihiro, Tokyo 108-8215 (JP); HIRAOKA, Naohiro, Tokyo 108-8215 (JP); KOMADA, Yasuyuki, Tokyo 108-8215 (JP)
(74) Representative: Hoffmann Eitle
(86) International application number: PCT/JP2013/052934
(87) International publication number: WO 2013/153842

(57) **Abstract**

An object is to provide a two-cycle gas engine which makes it possible to suppress generation of black exhaust, PM, or NOx during a gas operation mode. The two-cycle gas engine includes a piston 4 that defines a main combustion chamber c1 with a surrounding wall 2a of a cylinder 2 and a cylinder head 3, a fuel gas injector 8 configured to inject fuel gas 8a, 8b into the main combustion chamber c1, a scavenging port 6 that supplies air into the main combustion chamber c1 upon the piston 4 being positioned in vicinity of a bottom dead center, a precombustion chamber cap 9 that defines a precombustion chamber inside thereof, the precombustion chamber communicating with the main combustion chamber c1 through nozzle holes 9b, a fuel injection timing control unit 12 configured to inject the fuel gas 8b into the main combustion chamber c1 upon the piston being positioned at 10° to 100° before top dead center in an ascending stroke and to inject the fuel gas 8a into the main combustion chamber upon the piston being positioned in the vicinity of the top dead center, and an ignition timing control unit 12 configured to ignite a mixed air of the fuel gas and the air inside the precombustion chamber upon the piston being positioned in the vicinity of the top dead center.

## Description

### TECHNICAL FIELD

The present invention relates to a two-cycle gas engine.

### BACKGROUND

Conventionally, there has been known a gas engine in which a fuel gas such as natural gas is used as a main fuel while a fuel oil such as gas oil having high compression-ignition properties is used as a pilot fuel, and the oil fuel is injected into a combustion chamber of high-temperature atmosphere to cause self-ignition of the oil fuel, thereby combusting the fuel gas being the main fuel. Further, as an example of a gas engine of this type, there has been also known a dual-fuel engine where its operation mode can be arbitrarily switched between a gas operation mode for operating the engine by combusting a fuel gas and a diesel operation mode for operating the engine by combusting a fuel oil.

For instance, Patent Document 1 discloses a dual-fuel diesel engine in which the main fuel is a fuel having a low cetane number and low compression-ignition properties such as a fuel gas, while the pilot fuel is a fuel oil having high compression-ignition properties. This engine in Patent Document 1 includes a fuel gas injection valve and a pilot fuel injection valve disposed on a cylinder head. The fuel gas and the pilot fuel are injected into a combustion chamber from the fuel gas injection valve and the pilot fuel injection valve, so as to cause self-ignition of the pilot fuel (fuel oil) in the high-temperature combustion chamber, thereby combusting the main fuel (fuel gas).

Furthermore, Patent Document 2 discloses a gas engine in which the main fuel is a fuel gas having low compression-ignition properties, while the pilot fuel is a diesel fuel having high compression-ignition properties such as gas oil or heating oil. This gas engine in Patent Document 2 includes an intake port and a diesel fuel injection unit disposed on a cylinder head, and a fuel gas injection unit disposed on the surrounding wall of a cylinder. Further, during an intake stroke in which a piston descends, air is introduced into a combustion chamber from the intake port, and the fuel gas is injected into the combustion chamber from the fuel gas injection unit at an appropriate timing between a later stage of the intake stroke and a later stage of a compression stroke. Then, when the piston has ascended to reach the vicinity of the top dead center, the diesel fuel is injected into the combustion chamber from the diesel fuel injection unit so as to cause self-ignition of the diesel fuel inside the combustion chamber, thereby combusting the fuel gas being the main fuel.

Still further, for instance, Patent Document 3 discloses a dual-fuel engine in which it is possible to employ either of the fuel for premix combustion (gas operation mode) where a fuel gas and the air are mixed before flowing into a combustion chamber or the fuel of diffusion combustion (diesel operation mode) where a fuel oil is directly injected into a combustion chamber to be combusted. Moreover, Patent Document 4 discloses a dual-fuel engine of a direct injection type, capable of switching its operation mode between a diesel operation mode and a gas operation mode of a pilot-injected fuel ignition type.

### Citation List

### Patent Literature

Patent Document 1: JPS62-45339
Patent Document 2: JPH6-137150
Patent Document 3: JP2008-202545
Patent Document 4:JP2008-51121

### SUMMARY

### Technical Problem

For the engine in Patent Document 1, the main fuel and the pilot fuel are supplied to the combustion chamber almost at the same time in the vicinity of the top dead center. Thus, the main fuel injected into the combustion chamber is immediately combusted before being stirred. Thus, the combustion of the main fuel takes place as diffusion combustion. In the case of diffusion combustion, uniform combustion is difficult compared to the case of premix combustion, which raises a problem of NOx (nitrogen oxide) being generated easily in a high-temperature combustion range.

Further, the above described gas engine in Patent Document 2 is an invention that was made to increase the amount of air taken into a combustion chamber. That is, in the invention disclosed in Patent Document 2, compared to the conventional case in which a mixed air of a fuel gas and air is introduced from an intake port, the air alone is taken in from the intake port while providing the fuel gas injection unit separately. Then, the fuel gas is injected into the combustion chamber at a timing other than the intake stroke by the fuel gas injection unit, so as to increase the amount of air taken into the combustion chamber from the intake port, thereby improving the output of the engine.

Patent Document 2 as described above does not disclose the technical idea of promoting premix so as to suppress generation of NOx (nitrogen oxide).

Furthermore, the engines in Patent Documents 3 and 4 are both configured to inject a small amount of fuel oil into a high-temperature combustion chamber as a pilot fuel in a gas operation mode so as to cause self-ignition of the injected fuel oil, thereby combusting a fuel gas inside the combustion chamber. This type, where a fuel gas is combusted by using a fuel oil as the pilot oil, has a problem of increased amount of black exhaust or PM generated during the gas operation mode. Also, the above described Patent Documents 3 and 4 both describe an invention related to a four-cycle engine but not a two-cycle gas engine as in the present invention.

The present invention is made in view of the above problem of the prior art, and is to provide a two-cycle gas engine capable of suppressing generation of black exhaust, PM, NOx or the like.

### Solution to Problem

The present invention was made in order to achieve the above described object, and a two-cycle gas engine of the present invention comprises: a cylinder; a cylinder head; a piston housed in the cylinder and configured to define a main combustion chamber with a surrounding wall of the cylinder and the cylinder head; a fuel gas injector configured to inject a fuel gas into the main combustion chamber; a scavenging port opened on the surrounding wall of the cylinder and configured to supply air into the main combustion chamber upon the piston being positioned in vicinity of a bottom dead center; a precombustion chamber cap disposed on the cylinder head so as to define a precombustion chamber inside thereof, the precombustion chamber communicating with the main combustion chamber through nozzle holes, and a spark plug being disposed in the precombustion chamber; a fuel injection timing control unit configured to cause the fuel gas injector to inject the fuel gas into the main combustion chamber upon the piston being positioned at 10° to 100° before top dead center in an ascending stroke and to cause the fuel gas injector to inject the fuel gas into the main combustion chamber upon the piston being positioned in the vicinity of the top dead center in a gas operation mode; and an ignition timing control unit configured to operate the spark plug to ignite a mixed air of the fuel gas and the air inside the precombustion chamber upon the piston being positioned in the vicinity of the top dead center.

In the two-cycle gas engine of the present invention with the above configuration, a fuel gas is injected by the fuel injection timing control unit upon the piston being positioned at 10° to 100° before top dead center to generate mixed air inside the main combustion chamber. The generated mixed air flows into the precombustion chamber through the nozzle holes on the precombustion chamber cap during further ascension of the piston. Then, upon the piston being positioned in the vicinity of the top dead center, the mixed air inside the precombustion chamber is ignited by the ignition timing control unit so as generate torches inside the precombustion chamber and then the torches are injected into the main combustion chamber through the nozzle holes. As a result, the fuel gas injected upon the piston being positioned in the vicinity of the top dead center and the mixed air inside the main combustion chamber are combusted.

According to the present invention, premix of the fuel gas injected upon the piston being positioned at 40° to 100° before top dead center with the air is promoted so as to reduce the proportion of diffusion combustion to the entire combustion, which makes it possible to suppress generation of NOx (nitrogen oxide).

Also, since the fuel gas is ignited by a sparkle plug without using a fuel oil, it is possible to suppress generation of black exhaust or particulate matter (PM) as well as to improve fuel economy performance.

Further, in the above invention, it is preferable that a fuel gas supply unit for supplying a fuel gas to the fuel gas injector is included, the fuel gas supply unit being configured capable of supplying a fuel gas to the precombustion chamber.

As described above, with the fuel gas supply unit being configured to supply a fuel gas to the fuel gas injector and also being capable of supplying a fuel gas to the precombustion chamber, it is possible to generate torches in the precombustion chamber stably regardless of the flow rate, concentration, etc of the mixed air that flows into the precombustion chamber.

### Advantageous Effects

According to the present invention, in a two-cycle gas engine, premix of a fuel gas with air is promoted by injecting the fuel gas upon the piston being positioned at 10° to 100° before top dead center and the mixed air of the fuel gas and the air is ignited by a spark plug without using a fuel oil. As a result, it is possible to provide a two-cycle gas engine where generation of black exhaust, PM, NOx or the like is suppressed and the fuel economy performance is improved.

### BRIEF DESCRIPTION OF DRAWINGS

FIG. 1 is a top view of a two-cycle gas engine according to the first embodiment of the present invention.
FIG. 2A is a cross-section taken along line A-A of FIG. 1.
FIG. 2B is a cross-section taken along line B-B of FIG. 1.
FIG. 3 is an enlarged cross-sectional view of a precombustion chamber cap according to the first embodiment of the present invention.
FIG. 4 is a schematic diagram for describing injection timing of fuel gas and operation timing of spark plugs according to the first embodiment of the present invention.
FIGs. 5A to 5C are schematic diagrams for describing function of the two-cycle gas engine according to the first embodiment of the present invention.
FIG. 6 is a schematic cross-sectional view of a two-cycle gas engine according to the second embodiment of the present invention.
FIG. 7 is an enlarged cross-sectional view of a precombustion chamber cap according to the second embodiment of the present invention.
FIG. 8 is a schematic diagram for describing injection timing of fuel gas and operation timing of spark plugs according to the second embodiment of the present invention.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

### (First embodiment)

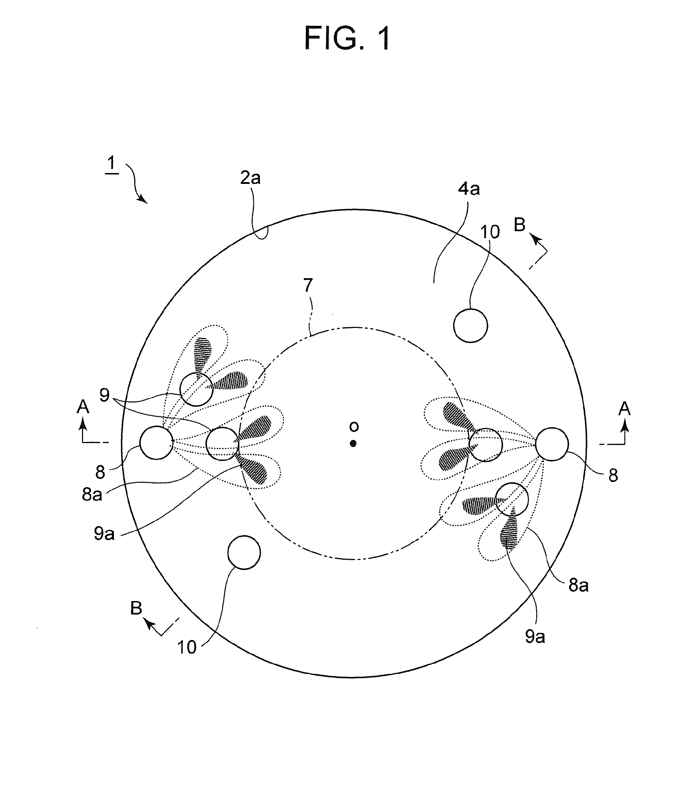

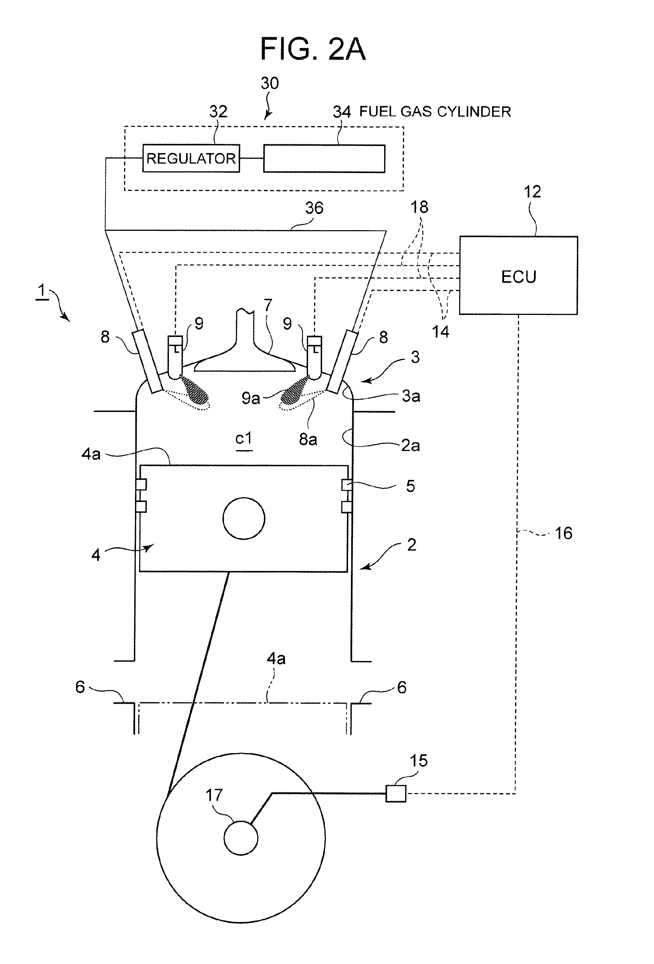

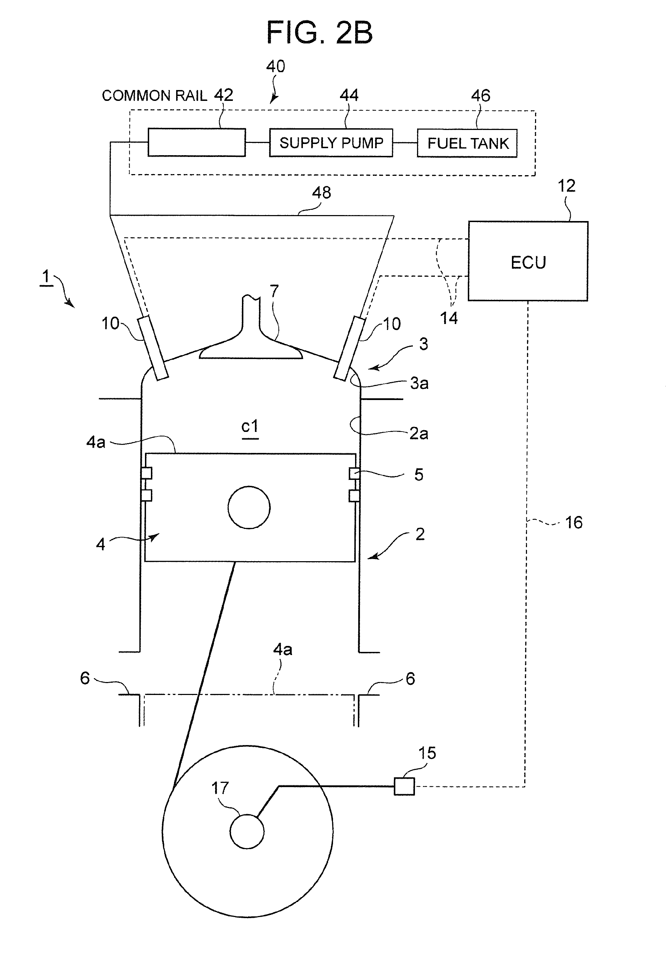

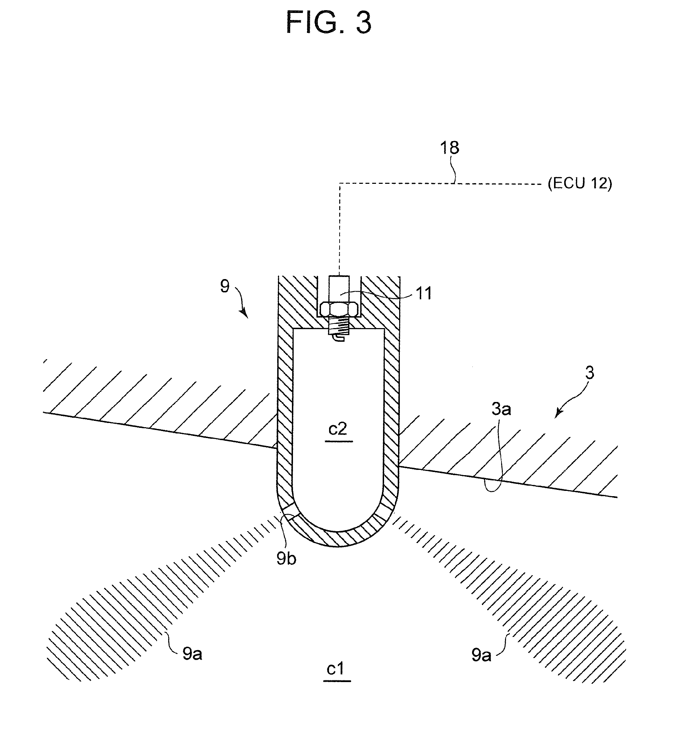

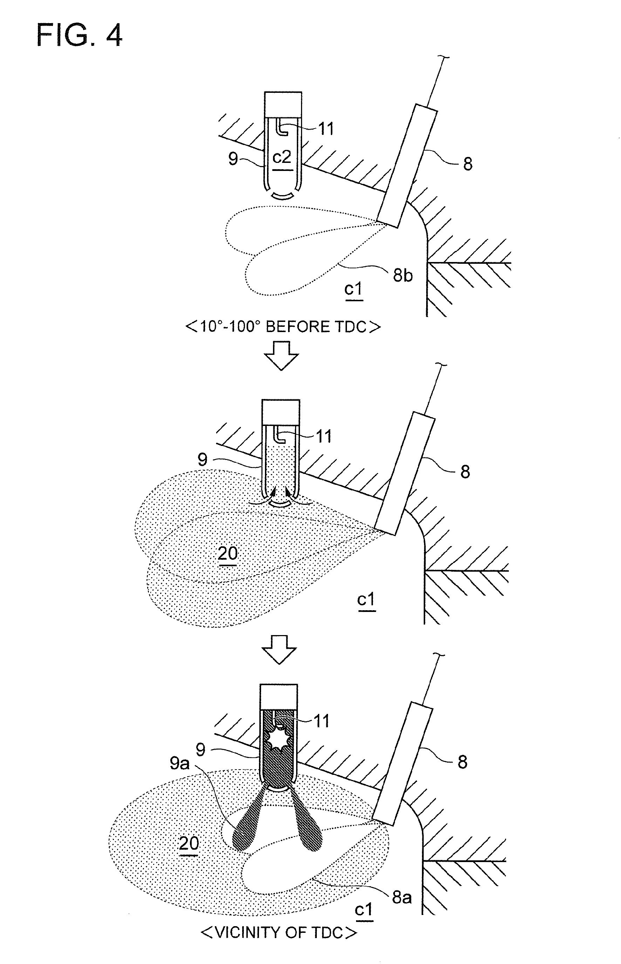

FIG. 1 is a top view of a two-cycle gas engine according to the first embodiment. FIG. 2A is a cross-section taken along line A-A of FIG. 1. FIG. 2B is a cross-section taken along line B-B of FIG. 1. FIG. 3 is an enlarged cross-sectional view of a precombustion chamber cap according to the first embodiment. FIG. 4 is a schematic diagram for describing injection timing of fuel gas and operation timing of spark plugs according to the first embodiment. First, based on FIGs. 1, 2A, 2B, 3, and 4, the configuration of a two-cycle gas engine according to the first embodiment will be described.

As shown in FIGs. 2A and 2B, a two-cycle gas engine 1 of the present embodiment includes a cylinder 2 of a cylindrical shape, a cylinder head 3 connected to an upper end side of the cylinder 2, and a piston 4 housed in the cylinder 2 so as to be freely reciprocable. A main combustion chamber c1 is defined by the surrounding wall 2a of the cylinder 2, the top wall 3a of the cylinder head 3, and the top face 4a of the piston 4. Here, the reference number 5 in the drawing indicates a piston ring.

Further, scavenging ports 6 open on the surrounding wall 2a at the lower side of the cylinder 2. The scavenging ports 6 are formed above the top face 4a of the piston 4 being positioned in the vicinity of the bottom dead center (the double-dotted chain line indicates such top face 4a), so that, when the piston 4 is in the vicinity of the bottom dead center, air is supplied to the main combustion chamber c1 from the scavenging ports 6. Also, on the top part of the cylinder head 3, an exhaust port opens and an exhaust valve 7 for opening and closing the exhaust port is disposed. During a scavenging stroke in which the piston 4 is in the ascending stroke, the exhaust valve 7 is kept open until the piston 4 arrives at the position of approximately 100° before top dead center. Then, the air supplied to the main combustion chamber c1 from the scavenging ports 6 scavenges the exhaust gas in the main combustion chamber c1 remaining from the previous stroke.

Moreover, the gas engine 1 of the present embodiment is configured as a dual-fuel engine capable of switching its operation mode between a gas operation mode for operating by combusting a fuel gas and a diesel operation mode for operating by combusting a fuel oil. Further, fuel gas injection units 8 (fuel gas injector) for injecting a fuel gas such as natural gas to the main combustion chamber c1 in the gas operation mode and fuel oil injection units 10 (fuel oil injector) for injecting a fuel oil (not shown) having high compression-ignition properties such as gas oil to the main combustion chamber c1 similarly are each disposed on the cylinder head 3.

### As illustrated in FIG. 1, a pair of fuel gas injection unit 8 and fuel oil injection unit 10 is formed on each of the two positions that are distanced by 180° from each other in the circumferential direction around the cylinder center "o" as the rotational center. Also, the fuel gas injection units 8 are configured to inject fuel gas 8a, 8b in the same direction as the direction in which the above described scavenging ports 6 are oriented.

Further, as illustrated in FIGs. 2A and 2B, the fuel gas injection units 8 and the fuel oil injection units 10 are connected to an engine control unit (ECU) 12 through cables 14. Further, the ECU 12 is connected to a crank angle sensor 15 for detecting a rotational angle of a crank shaft 17 through a cable 16. Then, the ECU 12 detects a phase of the piston 4 by receiving a signal related to a rotation angle of the crank shaft 17 from the crank angle sensor 15. The fuel gas injection units 8 and the fuel oil injection units 10 inject the fuel gas 8a, 8b and the fuel oil into the main combustion chamber c1 at a predetermined timing based on a signal transmitted from the ECU 12.

Specifically, upon the piston 4 being in the ascending stroke and positioned at 10° to 100° before top dead center during the gas operation mode, a signal is transmitted from the ECU 12 to the fuel gas injection units 8, so that the fuel gas 8b is injected into the main combustion chamber c1 from the fuel gas injection units 8 as illustrated in FIG. 4. The injected fuel gas 8b is mixed with the air inside the main combustion chamber c1 in the process in which the piston 4 ascends so as to become mixed air 20. This mixed air 20 diffuses inside the main combustion chamber c1, while also diffusing inside a precombustion chamber c2 which communicates with the main combustion chamber c1 through the nozzle holes 9b.

Upon the piston 4 being positioned in the vicinity of the top dead center, a signal is transmitted from the ECU 12 to the fuel gas injection units 8, so that the fuel gas 8a is injected to the main combustion chamber c1 from the fuel gas injection units 8. In other words, the ECU 12 corresponds to a fuel injection timing control unit in the present embodiment. Further, as illustrated in FIG. 4, upon the piston 4 being positioned in the vicinity of the top dead center, the fuel gas 8a and the mixed air 20 are combusted in the main combustion chamber c1 by torches 9a described below injected from the nozzle holes 9b of the precombustion chamber cap 9.

Furthermore, in the diesel operation mode, upon the piston 4 being positioned in the vicinity of the top dead center, a signal is transmitted from the ECU 12 to the fuel oil injection units 10, so that fuel oil is injected into the main combustion chamber c1 from the fuel oil injection units 10. Then, the fuel oil having high compression-ignition properties self-ignites inside the main combustion chamber c1 of a high-temperature atmosphere, which causes the fuel oil to combust in the main combustion chamber c1. Herein, "the vicinity of the top dead center" in the present invention means the state in which the piston 4 is positioned in a range of from 10° before top dead center to 20° after top dead center.

In the present invention, the number of installed fuel gas injection units 8 and fuel oil injection units 10 is not particularly limited and for instance it may be one for each. However, in the present embodiment where the exhaust valve 7 is disposed on the top part of the cylinder head 3, it is preferable that a plurality of the fuel gas injection units 8 are arranged at equal intervals in the circumferential direction, and so are a plurality of fuel oil injection units 10.

Further, as illustrated in FIG. 2A, a fuel gas supply pipe 36 is connected to the fuel gas injection units 8, so that the fuel gas injection units 8 are connected to a fuel gas cylinder 34 via a regulator 32 that adjusts the supply amount of the fuel gas. By adjusting the opening degree of the regulator 32, the fuel gas, which is stored in the fuel gas cylinder 34 in the state of being pressurized, is supplied to the fuel injection units 8 through the fuel gas supply pipe 36. That is, the fuel gas supply unit 30 for supplying fuel gas to the fuel gas injection units 8 includes the regulator 32, the fuel gas cylinder 34 and the fuel gas supply pipe 36.

Further, as illustrated in FIG. 2B, a fuel oil supply pipe 48 is connected to the fuel oil injection units 10, so that the fuel oil injection units 10 are connected to a fuel tank 46 for storing fuel oil via a common rail 42 and a supply pump 44. The high-pressure fuel oil having been pressurized by the supply pump 44 and accumulated in a common rail 42 is supplied to the fuel oil injection units 10 through the fuel oil supply pipe 48. That is, the fuel oil supply unit 40 for supplying fuel oil of high-pressure to the fuel oil injection units 10 includes the common rail 42, the supply pump 44, the fuel tank 46 and the fuel oil supply pipe 48.

Moreover, as illustrated in FIGs. 1 and 2A, a precombustion chamber cap 9 is disposed on the cylinder head 3. The number of the installed precombustion chamber cap 9 is not particularly limited, and two precombustion chamber caps 9 are provided for each of the fuel gas injection units 8 in the present embodiment. Further, as illustrated in FIG. 3, each of the precombustion chamber caps 9 has a precombustion chamber c1 defined inside, and a spark plug 11 is disposed on the upper part of each precombustion chamber c1. Further, nozzle holes 9b are penetrated on a tip end part of each precombustion chamber cap 9, so that the precombustion chamber c2 is in communication with the main combustion chamber c1 through the nozzle holes 9b.

Further, as illustrated in FIG. 2A, each precombustion chamber cap 9 and the ECU 12 are connected to each other through a cable 18. The spark plugs 11 are operated at a predetermined timing based on a signal transmitted from the ECU 12. Specifically, during the gas operation mode, upon the piston 4 being positioned in the vicinity of the top dead center, a signal is transmitted from the ECU 12 to the spark plugs 11 so that the mixed air 20 inside the precombustion chamber c2 is ignited to generate torches 9a as illustrated in FIG. 4. That is, the ECU 12 corresponds to an ignition timing control unit in the present embodiment.

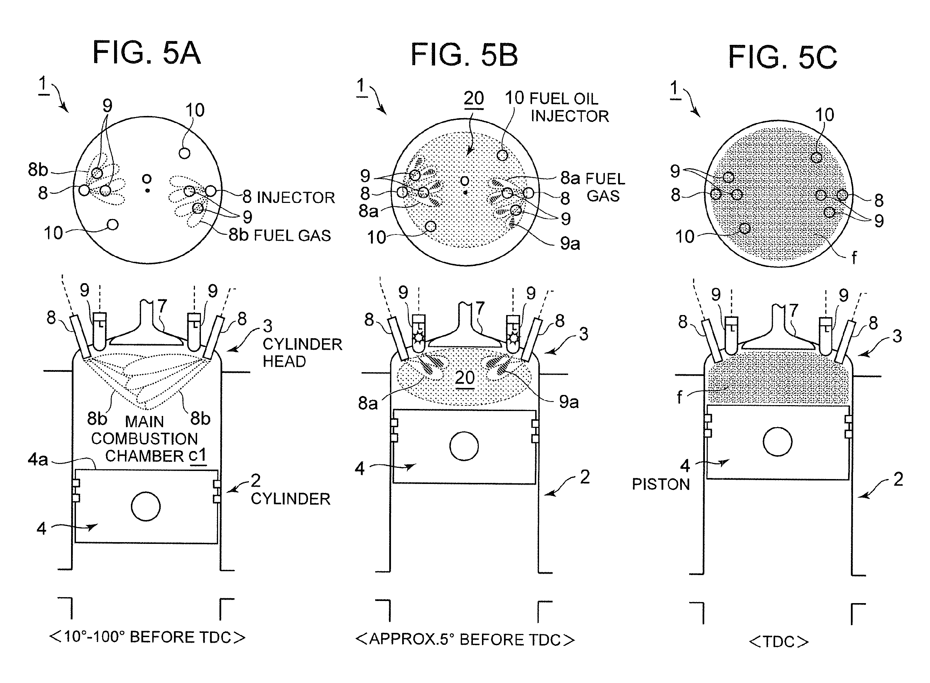

Next, the function of the two-cycle gas engine 1 according to the first embodiment with the above configuration will be described based on FIGs. 5A to 5C, which are schematic diagrams for describing function of the two-cycle gas engine according to the first embodiment of the present invention. FIGs. 5A to 5C respectively illustrate (a) a state where the piston 4 is positioned at 10° to 100° before top dead center, (b) a state where the piston 4 is positioned at approximately 5° before top dead center, and (c) a state where the piston 4 is positioned at the top dead center.

In the two-cycle gas engine 1 of the present embodiment, fuel gas 8b is injected into the main combustion chamber c1 from the fuel gas injection units 8 based on a signal transmitted from the ECU 12 (fuel injection timing control unit) when the piston 4 is in the ascending stroke and is positioned at 10° to 100° before top dead center (the state illustrated in FIG. 5A) as described above. By the fuel gas 8b being injected into the main combustion chamber c1 when the piston 4 is positioned at 10° to 100° before top dead center as described above, the injected fuel gas 8b and the air inside the main combustion chamber c1 are mixed so as to promote premix during further ascension of the piston 4 toward the vicinity of the top dead center. Accordingly, mixed air 20 is generated inside the main combustion chamber c1 as illustrated in FIG. 5B.

Then, upon the piston 4 arriving at the vicinity of the top dead center (for instance, approximately 5° before top dead center), based on a signal transmitted from the ECU 12 (fuel injection timing control unit), fuel gas 8a is injected from the fuel gas injection units 8 as described above. Further, based on a signal transmitted from the ECU 12 (ignition timing control unit) described above, the spark plugs 11 are operated to ignite the mixed air 20 inside the precombustion chambers c2.

Subsequently, the torches 9a generated inside the precombustion chambers c2 are injected into the main combustion chamber c1 from the nozzle holes 9b, thereby combusting the injected fuel gas 8a and the mixed air 20 at the same time. Then, as illustrated in FIG. 5C, explosive combustion is caused where the main combustion chamber c1 is entirely filled with flame "f".

As described above, for the two-cycle gas engine 1 of the present embodiment, the fuel gas 8b is injected upon the piston 4 being positioned at 10° to 100° before top dead center, and the fuel gas 8a is injected upon the piston 4 being positioned in the vicinity of the top dead center while operating the spark plugs 11. Thus, premix of the fuel gas 8b, that has been injected upon the piston 4 being positioned at 10° to 100° before top dead center, with the air is promoted so as to generate the mixed air 20, causing a part of the combustion to become premix combustion. As a result, compared to the conventional gas engine where the entire combustion is diffusion combustion, it is possible to suppress generation of NOx (nitrogen oxide).

Furthermore, since the fuel gas is ignited by the spark plugs 11 without using fuel oil, it is possible to suppress generation of black exhaust, particulate matter (PM), etc as well as to improve fuel economy performance.

### (Second embodiment)

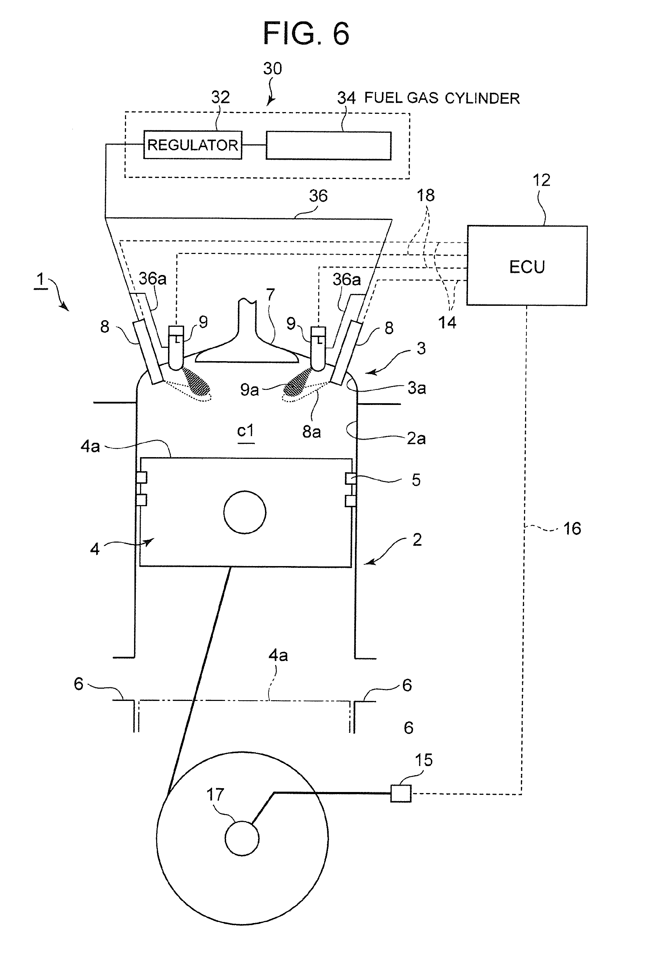

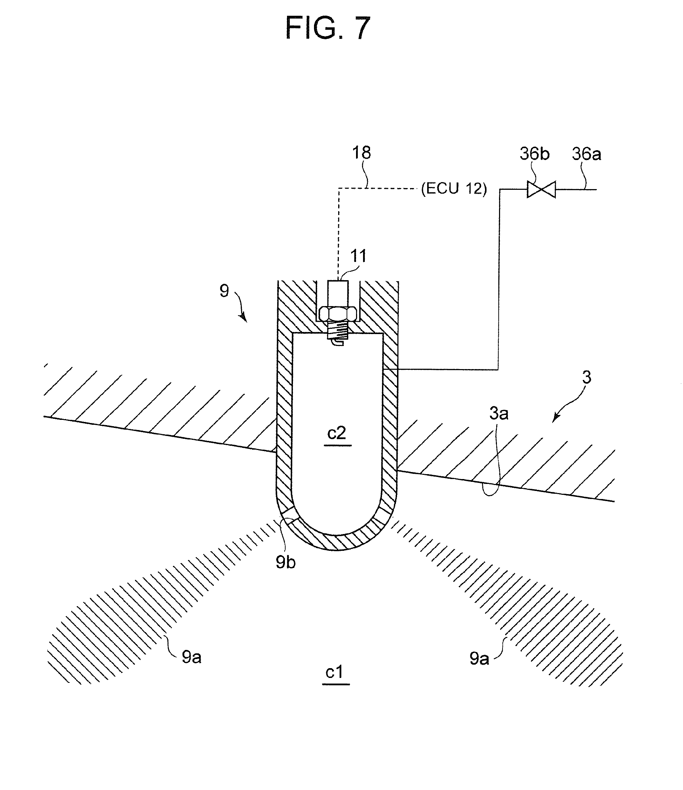

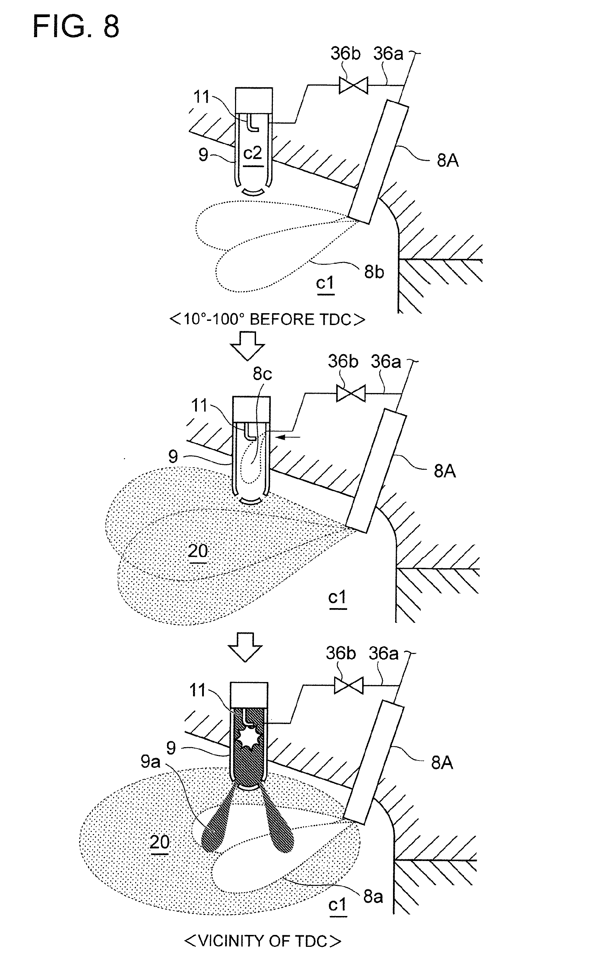

Next, a two-cycle gas engine according to the second embodiment will be described based on FIGs. 6 to 8. FIG. 6 is a schematic cross-sectional view of a two-cycle gas engine according to the second embodiment. FIG. 7 is an enlarged cross-sectional view of a precombustion chamber cap according to the second embodiment. FIG. 8 is a schematic diagram for describing injection timing of fuel gas and operation timing of spark plugs according to the second embodiment. Here, the two-cycle gas engine 1 of the present embodiment has a basically similar configuration to that of the two-cycle gas engine 1 of the above described embodiment. Thus, the same elements are associated with the same reference signs to omit detailed description.

As illustrated in FIG. 6, the two-cycle gas engine 1 of the present embodiment is different from the above described embodiment in that, in a fuel gas supply unit 30 including a regulator 32, a fuel gas cylinder 34, and a fuel gas supply pipe 36, branch pipes 36a branch from the fuel gas supply pipe 36 and connect to the above described precombustion chamber caps 9. Further, as illustrated in FIG. 7, a control valve 36b is disposed in middle of each branch pipe 36a. The control valve 36b is an electromagnetic control valve connected to the ECU 12, for instance, and configured to open and close in accordance with a signal transmitted from the ECU 12. By opening the control valve 36b, it is possible to supply fuel gas to the precombustion chamber c2 defined inside the precombustion chamber cap 9.

As illustrated in FIG. 8, in the two-cycle gas engine 1 of the present embodiment with the above configuration, at an appropriate time when the piston 4 is in its ascending stroke, fuel gas 8c is supplied to the precombustion chamber c2 by the above described fuel gas supply unit 30. Then, upon the piston 4 being positioned in the vicinity of the top dead center, the ECU 12 transmits a signal to the spark plug 11, and the mixed air of the fuel gas 8c and air inside the precombustion chamber c2 is ignited to generate the torches 9a.

As described above, the fuel gas supply unit 30 for supplying fuel gas to the fuel gas injection units 8 (fuel gas injector) is configured capable of supplying fuel gas to the precombustion chambers c2 as well, which makes it possible to generate torches 9a inside the precombustion chambers c2 stably regardless of the flow rate, concentration etc of the mixed air 20 that flows into the precombustion chambers c2.

According to the two-cycle gas engine of the present invention described above, the fuel gas is injected upon the piston being positioned at 10° to 100° before top dead center so as to promote premix of the fuel gas and air, while igniting the mixed air of the fuel gas and the air by the spark plugs without using fuel oil. As a result, it is possible to provide a two-cycle gas engine where generation of black exhaust, PM, NOx, etc is suppressed and fuel economy performance is improved.

Embodiments of the present invention were described in detail above, but the present invention is not limited thereto, and various amendments and modifications may be implemented within a scope that does not depart from the present invention.

For instance, in the above embodiments, an example is described where the two-cycle gas engine of the present invention is a dual-fuel engine configured capable of switching its operation mode from a gas operation mode for operating by combusting a fuel gas and a diesel operation mode for operating by combusting fuel oil. However, the two-cycle gas engine 1 of the present invention is not limited to this, and it may be applied to a normal gas engine which has no fuel oil injection unit 10 provided and always operates by combusting fuel gas alone.

### Industrial Applicability

The two-cycle gas engine of the present invention can be suitably used as an engine for a construction machine, for a heavy vehicle, for power generation, etc, and in particular for a ship.

## Claims

1. A two-cycle gas engine comprising:
a cylinder;
a cylinder head;
a piston housed in the cylinder and configured to define a main combustion chamber with a surrounding wall of the cylinder and the cylinder head;
a fuel gas injector configured to inject a fuel gas into the main combustion chamber;
a scavenging port opened on the surrounding wall of the cylinder and configured to supply air into the main combustion chamber upon the piston being positioned in vicinity of a bottom dead center;
a precombustion chamber cap disposed on the cylinder head so as to define a precombustion chamber inside thereof, the precombustion chamber communicating with the main combustion chamber through nozzle holes, and a spark plug being disposed in the precombustion chamber;
a fuel injection timing control unit configured to cause the fuel gas injector to inject the fuel gas into the main combustion chamber upon the piston being positioned at 10° to 100° before top dead center in an ascending stroke and to cause the fuel gas injector to inject the fuel gas into the main combustion chamber upon the piston being positioned in the vicinity of the top dead center; and
an ignition timing control unit configured to operate the spark plug to ignite a mixed air of the fuel gas and the air inside the precombustion chamber upon the piston being positioned in the vicinity of the top dead center.

2. The two-cycle gas engine according to claim 1, further comprising
a fuel gas supply unit configured to supply the fuel gas to the fuel gas injector,
wherein the fuel gas supply unit is configured capable of supplying the fuel gas to the precombustion chamber.

## Amended claims

### Amended claims under Art. 19.1 PCT

1. A two-cycle gas engine comprising:
a cylinder;
a cylinder head;
a piston housed in the cylinder and configured to define a main combustion chamber with a surrounding wall of the cylinder and the cylinder head;
a scavenging port opened on the surrounding wall of the cylinder and configured to supply air into the main combustion chamber upon the piston being positioned in vicinity of a bottom dead center;
a precombustion chamber cap disposed on the cylinder head so as to define a precombustion chamber inside thereof, the precombustion chamber communicating with the main combustion chamber through nozzle holes, and a spark plug being disposed in the precombustion chamber;
a fuel gas injector disposed outsize the precombustion chamber and configured to directly inject the fuel gas into the main combustion chamber without the fuel gas passing through the precombustion chamber;
a fuel injection timing control unit configured to cause the fuel gas injector to inject the fuel gas upon the piston being positioned before vicinity of a top dead center in an ascending stroke and to cause the fuel gas injector to inject the fuel gas upon the piston being positioned in the vicinity of the top dead center; and
an ignition timing control unit configured to operate the spark plug to ignite a mixed air of the fuel gas and the air inside the precombustion chamber upon the piston being positioned in the vicinity of the top dead center.

2. The two-cycle gas engine according to claim 1, further comprising
a fuel gas supplying unit configured to supply the fuel gas to the fuel gas injector,
wherein the fuel gas supplying unit is configured capable of supplying the fuel gas to not only the fuel gas injector but also the precombustion chamber.
